(19) **Europäisches Patentamt / European Patent Office / Office européen des brevets**

(11) **EP 4 561 089 A1**

(12) **EUROPEAN PATENT APPLICATION**

(43) Date of publication:
28.05.2025 Bulletin 2025/22

(21) Application number: 23315437.6

(22) Date of filing: 22.11.2023

(51) International Patent Classification (IPC):
H04N 23/68 (2023.01)   H04N 23/71 (2023.01)
H04N 23/73 (2023.01)   H04N 23/95 (2023.01)

(52) Cooperative Patent Classification (CPC):
H04N 23/71; H04N 23/681; H04N 23/6811;
H04N 23/682; H04N 23/684; H04N 23/73;
H04N 23/90

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Prophesee
75012 Paris (FR)

(72) Inventors:
• SIRONI, Amos
56230 Qestembert (FR)
• PERRONE, Daniele
38700 La Tronche (FR)
• DZIRI, Aziz
91300 Massy (FR)

(74) Representative: de Jong, Jean Jacques
Omnipat
610 Chemin de Fabrègues
13510 Éguilles (FR)

(54) **EVENT-BASED MOTION ESTIMATION FOR AUTO-EXPOSURE DETERMINATION**

(57) An image acquisition method is generally provided, comprising the steps of providing a frame-based camera (10) having a field of view; storing a series of events produced during an acquisition time interval (ΔT, Texp) by an event-based camera (12) viewing a target scene in the field of view of the frame-based camera; estimating motion (16) in the target scene based on the events stored during the acquisition interval; determining an exposure time (Texp) based on the estimated motion; and applying the exposure time to the frame-based camera (10) for capturing a frame.

Fig. 1

EP 4 561 089 A1

# EP 4 561 089 A1

**Description**

**Technical Field**

The present invention relates to still-frame image processing, and more particularly to techniques that use motion estimation for adjusting the exposure time of frames.

**Background**

The scientific paper [Liba O. et al, "Handheld mobile photography in very low light", ACM Trans. Graph.38, 6, Article 164 (November 2019)] discloses a low-light picture processing technique based on capturing, aligning, and combining multiple frames. The system employs "motion metering", which uses an estimate of motion magnitudes (whether due to handshake or moving objects) to identify the number of frames and the per-frame exposure times that together minimize both noise and motion blur in a captured burst. These frames are combined using robust alignment and merging techniques that are specialized for high-noise imagery.

Accurate motion estimation is important for satisfactory results. Wrong motion estimation may lead to wrong calculations of exposure times and wrong alignment between the frames which will compromise the quality of the combining step, producing artifacts such as ghosting, double edges, loss of texture, etc.

**Summary**

An image acquisition method is generally provided, comprising the steps of providing a frame-based camera having a field of view; storing a series of events produced during an acquisition time interval by an event-based camera viewing a target scene in the field of view of the frame-based camera; estimating motion in the target scene based on the events stored during the acquisition interval; determining an exposure time based on the estimated motion; and applying the exposure time to the frame-based camera for capturing a frame.

The duration of the acquisition time interval may be determined dynamically according to the following steps: starting the acquisition time interval; continuously calculating a motion score based on the events being stored; and terminating the acquisition time interval when the motion score reaches a threshold criterion.

The method may comprise the steps of a) starting an exposure of the frame-based camera when starting the acquisition interval; b) configuring the motion estimation to produce a maximum motion magnitude in the scene as the motion score; and c) stopping the exposure upon termination of the acquisition time interval.

The motion score may be a number of events.

The method may comprise the steps of setting the threshold to a value such that the corresponding maximum motion magnitude causes a motion blur that can be compensated by a motion-deblurring operation; and subjecting the frame to a motion-deblurring operation based on events stored during the exposure time interval of the frame.

The method may comprise the steps of repeating steps a), b) and c) multiple times to capture multiple frames; synchronizing timestamps of the events and timestamps of the frames; selecting an anchor frame among the multiple frames; aligning a current frame with respect to the anchor frame, based on stored events corresponding to an interval between the anchor frame and the current frame; and merging the aligned frame and the anchor frame.

The aligning step may comprise the steps of generating an optical flow for a current frame with respect to the anchor frame, based on the stored events; and creating the aligned frame by applying the optical flow to the current frame.

The anchor frame may be selected as the frame achieving the smallest maximum motion magnitude.

The step of generating the optical flow may comprise applying a convolutional neural network to stored events corresponding to an interval between the anchor frame and the current frame.

A camera is also provided, comprising a frame-based camera module; an event-based camera module storing a series of events produced during an acquisition time interval from a target scene in the field of view of the frame-based camera module; a motion estimator configured to estimate motion in the target scene based on the events stored during the acquisition interval; a control circuit operating on the stored events, configured to determine an exposure time based on the estimated motion; and apply the exposure time to the frame-based camera module for capturing a frame.

The control circuit may be configured to start a dynamic acquisition interval; configure the motion estimator to continuously calculate a motion score based on the events being stored; and terminate the acquisition interval when the motion score reaches a threshold criterion.

The control circuit may be further configured to start an exposure of the frame-based camera module when starting the acquisition interval; configure the motion estimator to produce a maximum motion magnitude in the scene as the motion score; and stop the exposure upon termination of the acquisition interval.

The frame-based camera module and the event-based camera module may be a single hybrid camera module comprising a single sensor array including both frame-based and event-based pixels.

**Brief Description of the Drawings**

Embodiments will be exposed in the following description provided for exemplary purposes only, in relation to the appended drawings, in which:

Figure 1 is a schematic diagram of a frame exposure time determination pipeline using an event-based sensor, according to an embodiment;

Figure 2 is a timing diagram illustrating an embodiment using a dynamically adjusted event acquisition time;

Figure 3 is a timing diagram illustrating an embodiment using a dynamically adjusted exposure time; and

Figure 4 is a schematic diagram of an embodiment of a multi-frame stacking pipeline using the dynamically adjusted exposure time of figure 3.

**Detailed Description**

Frame-based motion estimation relies on the presence of sharp edges in consecutive frames, i.e., high-contrast transitions in the frames. When the acquired frames have motion blur, because the exposure times are too long, the edges become smooth and have lower contrast, which adversely affects the accuracy of the motion estimation based on these frames.

In order to reduce motion blur, shorter exposure times may be used, but this will require a higher signal gain (or ISO number) to obtain correctly exposed frames, reducing the signal-to-noise ratio (SNR). In noise-reduction applications, using frames having a lower SNR requires more frames to obtain a satisfactory result, increasing latency and computing resources.

To overcome the effects of motion blur on motion estimation, it is provided herein to use an event-based camera module viewing the same scene as a frame-based camera module and to operate the motion estimation on the events produced by the scene. Event-based cameras are asynchronous and react much faster (in the order of microseconds) at the scale of the exposure times involved in frame-based imaging (tens of milliseconds) and are not subject to motion blur.

As regards determining the exposure time based on motion estimation, the asynchronous and real-time nature of the event data produced by the event-based camera may be used online to dynamically adjust parameters, such as adjusting a frame exposure time while the frame is being captured.

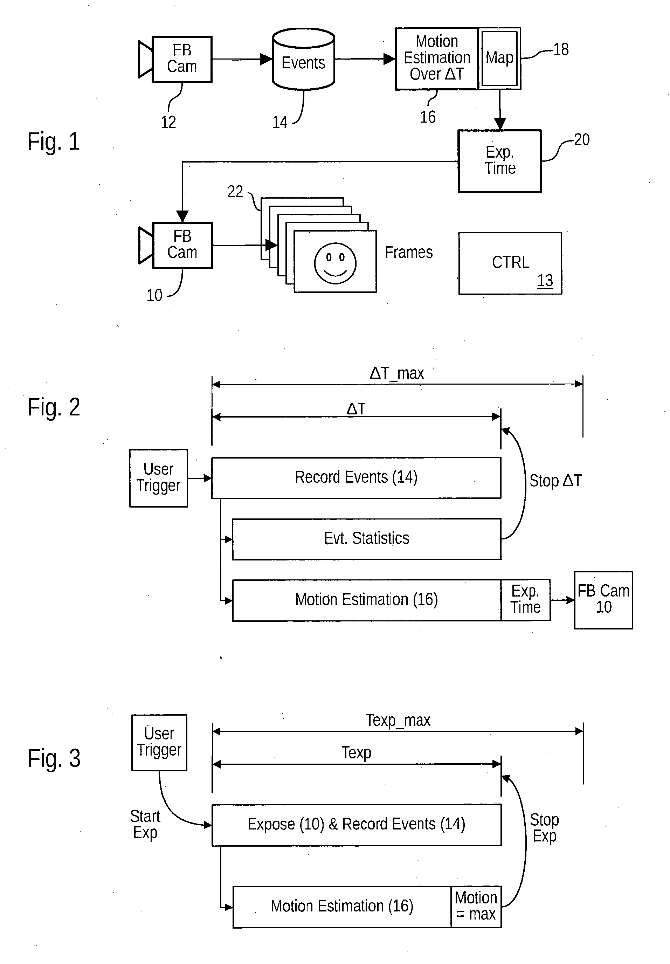

Figure 1 is a schematic diagram of a frame exposure time determination pipeline using an event-based sensor, according to an embodiment. The pipeline may be implemented in a camera or a smartphone. It includes a frame-based camera module 10 and an event-based camera module 12 arranged to view the same scene. A control circuit or microcontroller 13 may be programmed to perform or manage various of the operations in the pipeline, wherein some of the operations, such as motion estimation, may be delegated to hardware accelerators dedicated to image processing.

Events produced by the event-based module 12 are stored in a buffer 14 where they may be analyzed by a motion estimator 16. For instance, motion is analyzed over an acquisition time interval $\Delta T$ that may be smaller than typically implemented exposure times or at least smaller than a frame-rate period the camera is capable of, and is long enough to capture sufficient event data for an accurate motion magnitude estimation. Since motion estimation is used for determining an exposure time, motion magnitudes are sufficient instead of an optical flow (i.e. vectors), which simplifies the involved calculations. The motion magnitudes per pixel are stored as a map 18. The map 18 is analyzed at 20 to determine an exposure time to use by the frame-based camera module 10. The camera module 10 may apply the exposure time to capture a current frame or a burst of multiple frames 22. The multiple frames may be used subsequently for noise-reduction techniques or other multi-frame stacking techniques.

The exposure time may be set less or equal to:

$$Texp = \Delta T \bullet B / M_{max},$$

Where B is a maximum desired blur value, in pixels, and $M_{max}$ is the maximum motion magnitude, also in pixels, looked up in the map 18.

To improve robustness, the magnitudes may be filtered as they are determined online to remove noise and outliers. The resolution of the magnitude map and the event-based camera may be lower than that of the frame-based camera, since only a global motion estimation in the scene is sufficient.

Figure 2 is a timing diagram illustrating an embodiment using a dynamically adjusted event acquisition time $\Delta T$.

When a user triggers a frame capture, the camera starts a current event acquisition time interval $\Delta T$ and starts recording events from the event-based module 12. As the events are recorded in buffer 14, statistics are gathered on the events while motion estimation 16 is performed in parallel on the same events.

The statistics applied are tailored to produce a motion score representative of.the amount of motion, such as simply the number of events counted since the beginning of the acquisition time interval.

When the motion score reaches a threshold criterion, the running acquisition time interval $\Delta T$ is stopped. The motion estimation 16 finishes operation on the events stored until then, producing for instance a corresponding magnitude map 18, from which the exposure time $Texp$ is determined. The frame-based camera module 10 is provided with the determined exposure time. The camera module 10 may then capture a frame while setting a corresponding aperture if it is adjustable, and a corresponding gain (ISO number) for a correct exposure.

In a situation where the score does not reach the threshold, meaning there is little motion in the scene, the acquisition is forced to stop when a maximum acquisition time interval $\Delta T_{max}$ is reached.

A typical motion score may be a number of events in the order of a few thousands, whereas $\Delta T_{max}$ may be a few tens of milliseconds.

With such a procedure, the acquisition time interval may be adjusted dynamically to the smallest value providing sufficient event data for a satisfactory motion estimation, reducing latency between the time the user triggers the process and the time the first frame is captured.

However, the exposure time is thus determined as an estimate based on a pre-analysis of the motion in the scene and is applied only after some latency to capture a frame or a burst of frames. During the latency, although the process tends to reduce it, the conditions may vary, especially introducing more motion or less light, whereby the exposure time may no longer be adapted.

Figure 3 is a timing diagram illustrating an embodiment providing a real-time dynamically adjusted exposure of a current frame. When a user triggers a frame capture, the camera starts an exposure time interval $Texp$ applied to the frame-based module 10, i.e. the frame-based module 10 is controlled to expose a current frame during the running time interval $Texp$. At the same time, the event-based module 12 is controlled to record events. As the events are recorded in the buffer 14, motion estimation 16 is performed online, incrementally updating the magnitude map 18.

When the magnitudes in the map reach a threshold corresponding to the maximum desired motion blur B, the running exposure time interval $Texp$ is stopped, stopping the exposure of the current frame. The current frame is then stored and may be post-processed.

In a situation where the magnitudes do not reach the threshold, meaning there is little motion in the scene, the exposure is forced to stop when a maximum exposure time interval $Texp_{max}$ is reached, to avoid over-exposure.

The value $Texp_{max}$ may be the exposure time the frame-based camera module would set automatically together with the aperture (if it is adjustable) and the gain (ISO number) for a correct exposure based on the light conditions at the time the process is triggered.

An optimal exposure time in terms of motion blur is thus determined and applied in real-time. In low light and high motion conditions, the exposure time may often be shorter than $Texp_{max}$, whereby the "missing" exposure time is compensated after the exposure time interval by increasing the signal gain. This in turn reduces the SNR. However, the SNR is reduced just sufficiently to satisfy the motion blur target.

As a less accurate alternative, the motion estimation phase 16 may be replaced with the statistical score calculation of figure 2, whereby the exposure time interval $Texp$ is terminated when the score reaches the threshold, for instance when the event count reaches a threshold number. Such an alternative has the advantage of being less compute intensive than maintaining an incremental motion magnitude map, but it is more prone to error, because a large number of events does not necessarily represent a large magnitude motion. For instance, an item in the scene may oscillate at a high frequency with a low amplitude, in which case the magnitude threshold would not be reached when proper motion estimation is used.

To slacken the motion blur constraints and thus promote better SNR, the maximum motion blur value B may be increased to an extent that can be compensated satisfactorily by a motion-deblurring technique. Indeed, events may be used effectively for removing motion blur, such as disclosed in patent application EP4168977. In that case, the incremental motion estimation performed on the events is configured to produce an optical flow rather than just a magnitude map. Then, motion blur in the current frame may be compensated based on the optical flow produced during the exposure time interval.

The dynamic and real-time process of figure 3 is particularly well suited to processing a burst of multiple consecutive frames, for instance according to multi-frame stacking techniques typically used for noise reduction, high dynamic range (HDR) imaging, super-resolution imaging, focus stacking, etc. Indeed, the technique may be applied to each frame of the burst to dynamically set its exposure time and simultaneously perform event-based motion estimation that will subsequently serve for the frame alignment procedures.

An alignment step typically estimates motion between each frame and an anchor frame. The resulting motion information is used to create for each frame a displacement map or optical flow referenced to the anchor frame. The displacement map includes a displacement vector for each pixel of the frame. Each frame is then aligned or registered with the anchor using its respective displacement map.

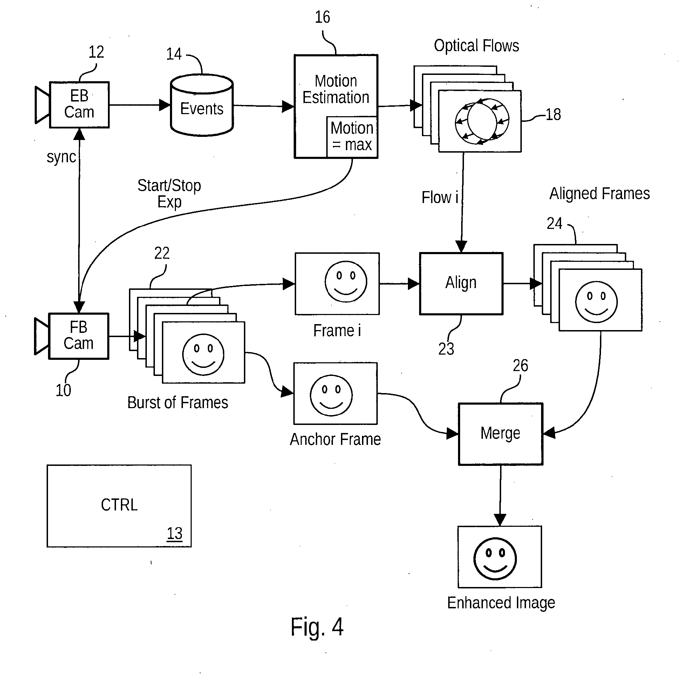

Figure 4 is a schematic diagram of a multi-frame'stacking pipeline using event-based motion estimation, that may apply dynamic exposure time determination to each frame according to figure 3. The pipeline of figure 1 has been complemented with additional steps involved in multi-frame stacking.

The frame-based and event-based camera modules 10, 12 are connected to synchronize their timestamps. The resolution of the timestamps is at least that of the events.

Preferably, both camera modules are implemented as a hybrid camera, i.e., using a single sensor array including both frame-based and event-based pixels. In such a hybrid camera, events and brightness signals are spatially in register. If spatially separated and off-axis cameras are used, an additional conventional step may be implemented to register the events with corresponding pixels of the frame-based camera module, such as disclosed in patent application EP4068207.

When a user presses a shutter button, the camera plans a default multi-frame sequence including a number of frames to store in buffer 22. The frame-based module 10 is controlled to capture each frame according to the process of figure 3, where, as soon as a current frame is stored after its dynamic exposure time, a next frame is captured with its own dynamic exposure time, and so on. The event-based module 12 records all the events occurring during the successive exposure intervals in buffer 14.

The first frame may be used as an anchor frame for the subsequent frame alignment procedure. As soon as the second or subsequent frame of the burst is stored, the motion estimation 18 may be initiated based on the events recorded between the current frame i and the anchor frame, here the first frame. Any of several known motion estimation techniques operating on events may be chosen, such as a convolutional neural network (CNN), that produces an optical flow for the current frame. Such an optical flow may typically be configured to provide, for each pixel of the current frame, a vector that displaces the pixel to the matching pixel in the anchor frame. An exemplary CNN is disclosed in [Zhu, Alex et al., "EV-FlowNet: Self-Supervised Optical Flow Estimation for Event-based Cameras", Robotics: Science and Systems (RSS), 2018].

As soon as the optical flow 18 for the current frame $i$ is ready, it may be used at 23 to align the current frame $i$ with the anchor frame and store a corresponding aligned frame at 24. The aligning operation typically involves displacing each pixel of the current frame by the corresponding vector provided in the current optical flow $i$, whereby the displaced pixel occupies another pixel location in the aligned frame. The operation may cause loss of some pixels at the edges of the frame when the vectors cross the frame edges.

Alternative solutions exist that directly produce an aligned frame without using optical flows or vectors, for instance by using a time shifting operator disclosed in patent application EP4168977, or by using machine learning methods as described in [Tulyakov, Stepan et al. "Time lens: Event-based video frame interpolation", Proceedings of the IEEE/CVF conference on computer vision and pattern recognition. 2021. p. 16155-16164.]

The aligned frames 24 and the anchor frame are merged at 26 to produce the final enhanced image. The merging technique used depends on the purpose of the multi-frame stacking (noise reduction, HDR, super-resolution, etc.). The aligned frames are like that produced with conventional multi-frame stacking techniques, so the merging technique may be any known technique. The aligned frames are however the result of a motion estimation based on events rather than on frames, so they are significantly more accurate, especially when the frames contain motion blur or when the frames have different exposure times.

Since motion for each frame of the burst is calculated with respect to a common anchor frame, that anchor frame is preferably of best quality, especially the sharpest in the burst. The sharpest frame may be determined as the one whose motion magnitude map has the smallest maximum magnitude.

In a multi-frame stacking process such as illustrated in figure 4, there are in fact two separate uses of the events stored throughout the capture of the multiple frames: i) the production of a motion magnitude map for each frame, based only on the events stored during the dynamic exposure time interval $Texp$ of the frame, and ii) the production of an optical flow for each frame, based on the events stored between the current frame and the anchor frame. A separate process may be implemented for each use, sharing the event data stored in the buffer 14.

A more compute-effective solution is to use a same motion estimation process for both uses, such as constructing a continuous time optical flow by feeding all the events to a convolutional neural network, see for instance [Gehrig, M. et al., "Dense Continuous-Time Optical Flow from Events and Frames", arXiv, 2022]. Such an operation creates a prediction function $B(t, x, y)$ that produces a pixel displacement vector for any triplet of parameters $(t, x, y)$, where $x$ and $y$ are the coordinates of the pixel to map, and $t$ is the timestamp of the frame to which the pixel is mapped.

The anchor frame is then assumed to be the first of the burst, for $t = 0$. For the alignment purposes, the time $t$ may be selected at a given position within the exposure time interval of each frame, such as in the middle. For the dynamic exposure time determination, the time $t$ may be the current time.

The new coordinates of a displaced pixel $X'$ at a time $t$ are thus expressed by:

$X'(t) = X + B(t, X)$, where $X = (x, y)$ is the pixel to map at time $t = 0$.

If the anchor frame is selected at a time $t_a \neq 0$, the displacement $D(t, t_a)$ at time $t$ referenced to the anchor frame is the displacement from the anchor frame to the first frame (at $t = 0$), plus the displacement from the first frame to the frame at time $t$, hence:

$$D(t, t_a) = B^{-1}(t_a, X_a) + B(t, B^{-1}(t_a, X_a)), \qquad (1)$$

where $B^{-1}$ is the inverse function of $B$, $X_a = (x_a, y_a)$ is the pixel to map in the anchor frame at time $t_a$ and $B^{-1}(t_a, X_a)$ is the displacement vector mapping pixel $X_a$ to the first frame at $t = 0$.

The new coordinates of a pixel $X'$ at a time $t$ displaced with respect to the anchor frame at time $t_a$ are then expressed by:

$$X'(t) = X_a + D(t, t_a).$$

For the dynamic exposure time adjustment, the displacement to consider is between the beginning of the exposure time interval $Texp$ and the current time, which may be obtained in relation (1) by affecting the beginning of the exposure time interval to time $t_a$ and affecting the current time to time $t$. Then $D(t, t_a)$ from relation (1) provides a displacement vector for each pixel at the beginning of the interval (time $t_a$) to a pixel at current time $t$. The magnitudes of these displacement vectors thus form the magnitude map used in determining the exposure time.

The resolutions of the frame-based and event-based modules may be different. Event-based sensor arrays may have a lower resolution than frame-based sensors. Although the motion estimation calculations may not be affected, the accuracy of the displacement vectors can be at most the same as the resolution of the event-based sensor. It is common practice however in frame-based algorithms to work in much lower resolution than the original image, while obtaining satisfactory results, see [Hasinoff SW et al. 2016, "Burst photography for high dynamic range and low-light imaging on mobile cameras", ACM Transactions on Graphics 35:192].

## Claims

1. An image acquisition method, comprising the following steps:

   providing a frame-based camera (10) having a field of view;
   storing a series of events produced during an acquisition time interval ($\Delta T$, $Texp$) by an event-based camera (12) viewing a target scene in the field of view of the frame-based camera;
   estimating motion (16) in the target scene based on the events stored during the acquisition interval;
   determining an exposure time (Texp) based on the estimated motion; and
   applying the exposure time to the frame-based camera (10) for capturing a frame.

2. The method of claim 1, wherein the duration of the acquisition time interval ($\Delta T$, $Texp$) is determined dynamically according to the following steps:

   starting the acquisition time interval;
   continuously calculating a motion score based on the events being stored (14); and
   terminating the acquisition time interval when the motion score reaches a threshold criterion:

3. The method of claim 2, comprising the following steps:

   a) starting an exposure ($Texp$) of the frame-based camera when starting the acquisition interval;
   b) configuring the motion estimation (16) to produce a maximum motion magnitude in the scene as the motion score; and
   c) stopping the exposure upon termination of the acquisition time interval.

4. The method of claim 2, wherein the motion score is a number of events.

5. The method of claim 3, comprising the steps of:

setting the threshold to a value such that the corresponding maximum motion magnitude causes a motion blur that can be compensated by a motion-deblurring operation; and

subjecting the frame to a motion-deblurring operation based on events stored during the exposure time interval (*Texp*) of the frame.

6. The method of claim 3 comprising the following steps:

repeating steps a), b) and c) multiple times to capture multiple frames;
synchronizing timestamps of the events and timestamps of the frames;
selecting an anchor frame among the multiple frames;
aligning (23) a current frame with respect to the anchor frame, based on stored events (14) corresponding to an interval between the anchor frame and the current frame; and
merging (26) the aligned frame and the anchor frame.

7. The method of claim 6, wherein the aligning step comprises:

generating an optical flow (18) for a current frame with respect to the anchor frame, based on the stored events (14); and
creating the aligned frame (23) by applying the optical flow to the current frame.

8. The method of claim 6, wherein the anchor frame is selected as the frame achieving the smallest maximum motion magnitude.

9. The method of claim 6, wherein the step of generating the optical flow comprises applying a convolutional neural network to stored events corresponding to an interval between the anchor frame and the current frame.

10. The method of claim 1, wherein the frame-based camera (10) and the event-based camera (12) are a single hybrid camera comprising a single sensor array including both frame-based and event-based pixels.

11. A camera comprising:

a frame-based camera module (10);
an event-based camera module (12) storing a series of events produced during an acquisition time interval ($\Delta T$, Texp) from a target scene in the field of view of the frame-based camera module;
a motion estimator (16) configured to estimate motion in the target scene based on the events stored during the acquisition interval;
a control circuit (13) operating on the stored events, configured to:

determine an exposure time (*Texp*) based on the estimated motion; and
apply the exposure time to the frame-based camera module for capturing a frame.

12. The camera of claim 11, wherein the control circuit is configured to:

start a dynamic acquisition interval;
configure the motion estimator (16) to continuously calculate a motion score based on the events being stored; and
terminate the acquisition interval when the motion score reaches a threshold criterion.

13. The camera of claim 12, wherein the control circuit is configured to:

start an exposure of the frame-based camera module when starting the acquisition interval;
configure the motion estimator (16) to produce a maximum motion magnitude in the scene as the motion score; and
stop the exposure upon termination of the acquisition interval.

14. The camera of claim 11, wherein the frame-based camera module (10) and the event-based camera module (12) are a single hybrid camera module comprising a single sensor array including both frame-based and event-based pixels.

Fig. 1

Fig. 2

Fig. 3

Fig. 4

Europäisches
Patentamt

European
Patent Office

Office européen
des brevets

# EUROPEAN SEARCH REPORT

**Application Number**

EP 23 31 5437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/167098 A1 (HUAWEI TECH CO LTD [CN]; MUUKKI MIKKO [SE]) 11 August 2022 (2022-08-11) | 1-4, 10-14 | INV. H04N23/68 H04N23/71 |
| Y | * figures 1,4,7,8,10 * * page 1, line 23 – line 26 * * page 2, line 10 – line 12 * * page 3, line 26 – line 27 * * page 4, line 3 – line 5 * * page 4, line 15 – line 18 * * page 19, line 12 – line 20 * * page 19, line 25 – line 31 * * page 22, line 7 – line 26 * * page 23, line 3 – line 6 * * page 26, line 22 – line 35 * ----- | 5-9 | H04N23/73 H04N23/95 |
| Y | US 2023/254579 A1 (PERRONE DANIELE [FR] ET AL) 10 August 2023 (2023-08-10) * figure 2 * * paragraph [0008] – paragraph [0011] * * paragraph [0020] * * paragraph [0035] * * paragraph [0037] * * paragraph [0054] – paragraph [0058] * * paragraph [0100] – paragraph [0109] * * paragraph [0141] – paragraph [0143] * ----- | 5-9 | |

TECHNICAL FIELDS
SEARCHED (IPC)

H04N

-/--

The present search report has been drawn up for all claims

| Place of search | Date of completion of the search | Examiner |
|---|---|---|
| Munich | 17 April 2024 | Furlan, Silvano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

**EP 23 31 5437**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GALLEGO GUILLERMO ET AL: "Event-Based Vision: A Survey", IEEE TRANSACTIONS ON PATTERN ANALYSIS AND MACHINE INTELLIGENCE, IEEE COMPUTER SOCIETY, USA, vol. 44, no. 1, 10 July 2020 (2020-07-10), pages 154-180, XP011891801, ISSN: 0162-8828, DOI: 10.1109/TPAMI.2020.3008413 [retrieved on 2021-12-06] * Sect. 4.2; page 164 - page 165 * * page 162, column 1 * ----- | 7,9 | |
| A | WO 2023/025185 A1 (UNIV HONG KONG [CN]) 2 March 2023 (2023-03-02) * abstract * ----- | 1-14 | |
| | | | **TECHNICAL FIELDS SEARCHED (IPC)** |

The present search report has been drawn up for all claims

| Place of search | Date of completion of the search | Examiner |
|---|---|---|
| Munich | 17 April 2024 | Furlan, Silvano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 31 5437**

This annex lists the patent family members relating to the patent documents cited in  the above-mentioned European search report.
The members are as contained in the European Patent Office EDP file on
The European Patent Office is in no way liable for these particulars which are merely given for the purpose of information.

**17-04-2024**

| Patent document cited in search report | Publication date | Patent family member(s) | Publication date |
|---|---|---|---|
| WO 2022167098 A1 | 11-08-2022 | CN    116918342 A | 20-10-2023 |
|  |  | WO    2022167098 A1 | 11-08-2022 |
| US 2023254579 A1 | 10-08-2023 | CN    115836318 A | 21-03-2023 |
|  |  | EP     3929864 A1 | 29-12-2021 |
|  |  | EP     4168977 A1 | 26-04-2023 |
|  |  | JP    2023531039 A | 20-07-2023 |
|  |  | KR  20230027052 A | 27-02-2023 |
|  |  | US    2023254579 A1 | 10-08-2023 |
|  |  | WO    2021259994 A1 | 30-12-2021 |
| WO 2023025185 A1 | 02-03-2023 | CN    117836816 A | 05-04-2024 |
|  |  | WO    2023025185 A1 | 02-03-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4168977 A

- EP 4068207 A

**Non-patent literature cited in the description**

- **LIBA O. et al.** Handheld mobile photography in very low light. *ACM Trans. Graph.*, November 2019, vol. 38 (6)
- **ZHU, ALEX et al.** EV-FlowNet: Self-Supervised Optical Flow Estimation for Event-based Cameras. *Robotics: Science and Systems (RSS*, 2018
- **TULYAKOV, STEPAN et al.** Time lens: Event-based video frame interpolation. *Proceedings of the IEEE/CVF conference on computer vision and pattern recognition.*, 2021, 16155-16164

- **GEHRIG, M. et al.** Dense Continuous-Time Optical Flow from Events and Frames. *arXiv*, 2022
- **HASINOFF SW et al.** Burst photography for high dynamic range and low-light imaging on mobile cameras. *ACM Transactions on Graphics*, 2016, vol. 35, 192